Europäisches Patentamt

European Patent Office

Office européen des brevets

(11) Publication number: **0 417 611 A2**

## EUROPEAN PATENT APPLICATION

(21) Application number: 90117019.1

(22) Date of filing: 04.09.90

(51) Int. Cl.⁵: **G06F 1/00**

(30) Priority: 14.09.89 US 407272

(43) Date of publication of application:
**20.03.91 Bulletin 91/12**

(84) Designated Contracting States:
**CH DE FR GB IT LI NL SE**

(71) Applicant: **Chou, Wayne W.**
**25 Hanley Place**
**Ridgefield, CT 06877(US)**

Applicant: **Erett, Richard E.**
**278 Russet Road**
**Stamford, Connecticut 06903(US)**

(72) Inventor: **Chou, Wayne W.**
**25 Hanley Place**
**Ridgefield, CT 06877(US)**
Inventor: **Erett, Richard E.**
**278 Russet Road**
**Stamford, Connecticut 06903(US)**

(74) Representative: **Wächtershäuser, Günter, Dr.**
**Tal 29**
**W-8000 München 2(DE)**

(54) Method and apparatus for protecting computer software using a presettable counter in combination with an additional function.

㉗ An active coded hardware device in the form of an active presettable counter circuit which contains an established preset code is plugged into a computer and is used for protecting software used with the computer. At least one additional function must be performed either before or after the counter is used in order to enable the actively coded hardware device to provide an output and if no output is generated, then the program contained in the software will not be permitted to continue insuring that the software is properly protected. In the example of a given function performed prior to the counter, a pair of bit streams, one of which may be from a secret stored non-volatile memory, such as a password are compared, which varies the count in the counter during each match of the inputs and resets the counter when a match does not occur. Accordingly, a predetermined correct succession of responses is required, or no output occurs dismissing one of the sources as an improper password. In the other form, the count in the counter is changed by a source of clock pulses whose output is fed to an addressable memory containing an access code which is not generated unless a proper code input from the counter is provided. Accordingly, in either the use before or after a function is performed, both the function and counter are combined in a manner which ensures that the software is properly protected at all times.

## BACKGROUND OF THE INVENTION

This invention relates to a security system for the protection of computer software, and more particularly to such a system which uses a plug-in coded hardware device in combination with the performance of an additional function which is performed either before or after the operation of the counter.

In U.S. Patent 4,562,306 (having the same inventors as the present application) an active coded hardware device having an established preset numerical code on an active presettable counter circuit is plugged into a communications port of a computer. A computer is directed by a software program having a small section of code which in effect interrogated the communications port to determine if the active coded hardware device is present and connected. If the active coded hardware device is present when interrogated, and the correct code returned through the communications port to the computer, the program was permitted to continue insuring that the software is properly protected. The active coded hardware devices are simple in use and relatively inexpensive and have proven effective for protecting computer software. Although a complexity of additional logic elements would make it more difficult in duplicating this device or finding out the preset code, it is still possible if enough effort is applied to determine the code which may be worthwhile for one who desires to make an unauthorized use of a software program. The present invention is directed to make that task of using or copying substantially more difficult if not impractical.

### Summary of the Invention

Accordingly, it is an object of the present invention to provide an new and improved method and apparatus for protecting computer software for preventing the unauthorized duplication and use of the protected software program.

A further object of this invention is to provide a plug-in device for protecting computer software which adds a function which must be performed in combination with a presettable counter in the plug-in device before the device can provide an output for providing considerably more security than other protection devices which are currently available.

Still another object of this invention is to provide a new and improved method and apparatus for protecting computer software which is flexible and permits a variety of encryption and interrogation sequences making it more difficult to find and decipher the code and sequences involved and thereby considerably more difficult to copy the protected software.

In carrying out this invention in one illustrative embodiment thereof, a method and apparatus for protecting computer software are provided using a hardware security device having a presettable counter which is removably connectable into a computer making the computer available to the hardware security device. The method in one form comprises the steps of performing a given function a predetermined number of times, generating a function output when the given function is performed, applying the function output to the counter for accessing the counter when the given function is performed the predetermined number of times; providing an output from the counter when the proper count preset in the counter is reached and resetting the counter to the initial preset condition when the proper response is not received from the function output.

The method where the function is performed subsequent to the operation of the computer utilizes presetting the counter to a predetermined number thereby providing an access code, and applying clock pulses to the counter for generating the access code when the preset number is reached. When the access code output occurs from the counter, applying the output of the counter to a function performing device for rendering the device operable to generate a data output therefrom.

The different functions in the form of passwords or outputs may be utilized in either the computer or the computer software for enabling or disabling the computer program unless the proper function is performed in combination with an output from the preset counter whether the function or functions are performed before or after the counter has generated the preset code.

### Brief Description of the Drawings

The invention, together with further objects, features, advantages and aspects thereof, will be more fully understood from the following description taken in conjunction with the accompanying drawings.

Fig. 1 is a schematic diagram illustrating a security system for computer software embodied in the present invention in which a preset counter is utilized after a given function is performed.

Fig. 2 is a schematic block diagram of the security system for a computer software embodied in the present invention in which the presettable counter is used prior to the performance of a subsequently performed function which in effect is initiated by the output of the counter.

Fig. 3 is a schematic diagram of an example of the invention in which the counting of the number of times a function is performed is under the control of a counter.

Fig. 4 is a schematic diagram of another example of the invention in which the function is to limit the use of a password generated from Fig. 1.

Fig. 5 is a schematic diagram of another example of the invention in which the counter may be reprogrammed after a password has been accepted as generated from Fig. 1.

Description of the Preferred Embodiments

In the following description, the presettable counter as disclosed in U.S. Patent 4,562,306 is plugged into a communications port as is shown and described in that patent and such descriptions are not repeated herein. With respect to the preset counter, the code may be set therein in any desired manner either by hard wiring or by electrical or mechanical actuation and to that extent, whether hard wired or electrically or mechanically activated is considered to be programmable. Since the present invention is directed to the performance of additional functions in combination with the counter described in the aforesaid patent, only examples of the combinations will be described and reference to the aforesaid patent should be made to more fully understand one type of interface between the security device and the computer. However, the use of the term plug-in or removably connectable with respect to the coded hardware device is intended to cover internal as well as any external interconnection with a computer with which the protection device is used.

In the aforesaid patent the preset counter was directly accessed and an output provided from the counter to and from the computer. In the present invention which constitutes an improvement of the aforesaid patent, a coded device in the form of a preset counter to provide the proper count is still used. However, rather than taking the count directly from the counter, a function is performed either before or after the counter. When the function is performed prior to outputting the counter, the function may be achieved a given number of time in proper sequence before the counter is accessed and an output rendered. When the function occurs subsequent to the counter, the counter controls the function which cannot occur unless the coded counter actuates or sets in motion the performance of a subsequent motion.

The performance of the given function may include the number of times the function is performed and/or the sequence of such performance. The function performed may comprise any variable quantity whose value depends on or varies with that of another quantity or quantities.

A "function" as stated in this application may be a collection of logical elements (AND, OR, NOR, XNOR, etc.) which when connected together perform or satisfies one or more Boolean expressions as desired. There is an infinite array of functions that can be achieved by connecting any number of logical elements together to satisfy any one or more given Boolean expressions. In fact, there are many arrangements of logical elements which will satisfy any group of Boolean expressions. Accordingly, this invention is not concerned with any particular function thus, defined, only that when any given function has been performed, that function is counted.

The invention will illustrate by means of some simple examples of various collections of logical elements which perform certain functions which, only by example, show the possible usefulness of counting the number of times a function is used and not necessarily how the function is achieved. The invention resides in using a counter to either count the number of times a given function is performed, or the counter is used to control a function when its terminal count has been reached.

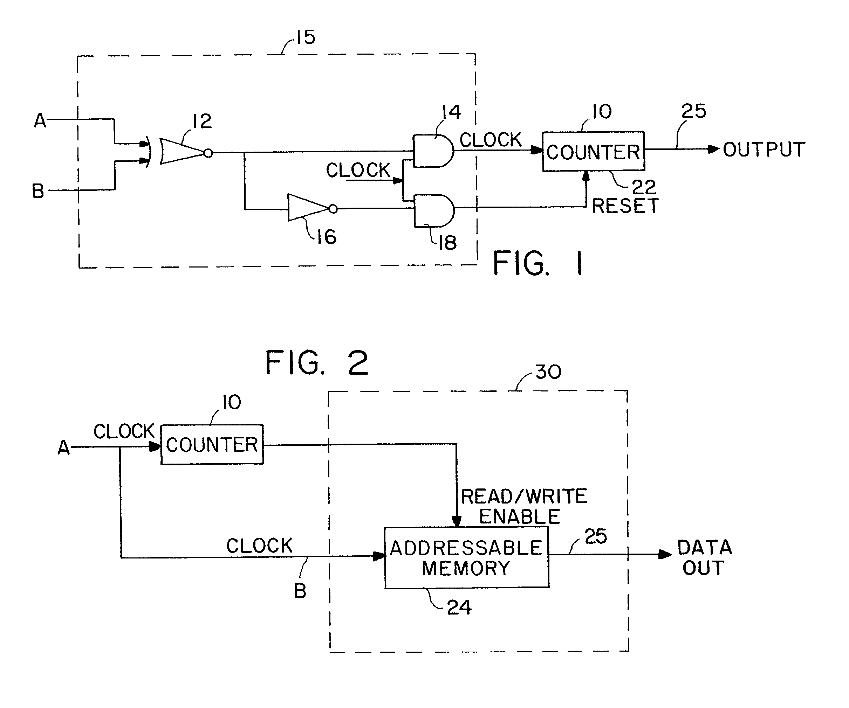

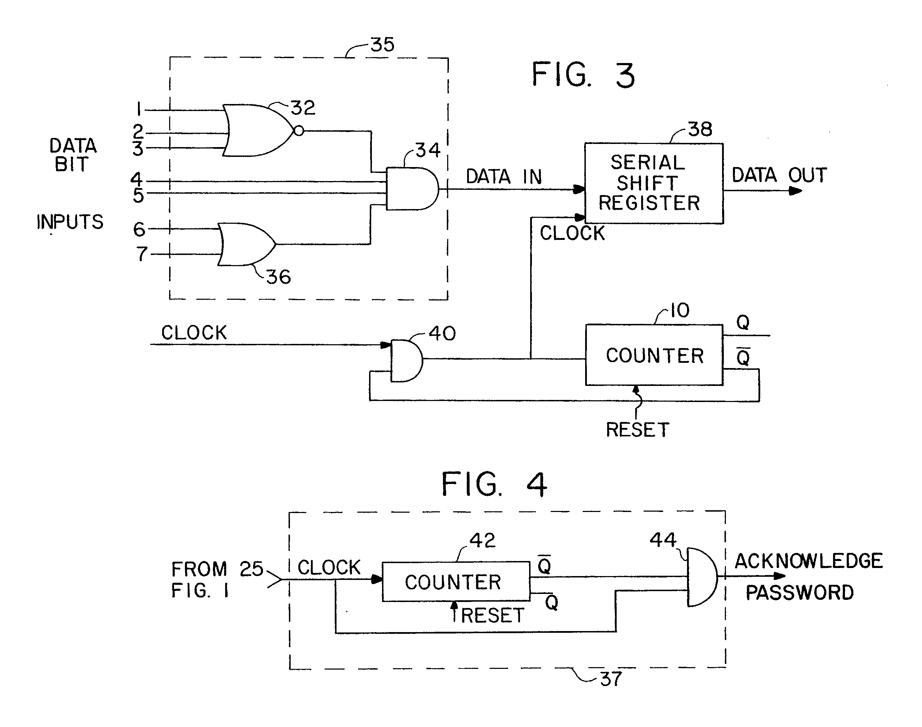

Referring now to Fig. 1, a programmable presettable counter 10 is provided which is preset to any desired number which forms the code of the counter. The counter 10 may have the code permanently wired therein, remotely set on a permanent basis or for that matter, may be programmed remotely and changed remotely as desired. Accordingly, the function of the counter 10 is to provide a code when a proper input is applied thereto provides an output when the preset number or code is inputted into the counter. In the embodiment illustrated in Fig. 1, the counter 10 is utilized subsequent to the performance of a given function. The function 15 in the illustrative embodiment of Fig. 1 comprises applying a source A and a source B in the form of input bit streams, one of which may be from secret stored non-volatile memory, e.g. a password, which for descriptive purposes will be considered source A in the example in Fig. 1. Sources A and B are applied to a comparator 12 which is illustrated in the form of an EXclusive NOR gate 12. The output of the EXclusive NOR gate or comparator 12 is applied to AND gate 14 and through an INverter 16 to AND gate 18. Clock pulses 20 are applied to AND gates 14 and 18. The output of AND gate 14 is applied to the counter 10 along with clock pulses 20 while the output of the AND gate 18 is applied to the reset terminal 22 of the counter 10. In operation, if the input bit stream of sources A and B match during each clock transition, counter 10 is incremented or decremented continually with each clock pulse 20. If during any time that the sources A and B do not match, the counter 10 is reset by the output of the AND gate 18 at reset terminal 22 to the original starting point. Accordingly, the counter 10 must receive a predetermined number of correct responses in succession in order to provide an output 25 or else no output occurs at the expected time dismissing source B as providing an improper password. The counter 10 may be operated by either incrementing or decrementing depending which way it is set to operate before an output occurs.

In the embodiment illustrated in Fig. 2 where the counter is used prior to the performance of a subsequent function 30, a source A which is a series of clock pulses are applied to the counter 10 which increments/decrements the counter providing an output when the code or the preset number in the counter has been reached. The output of the counter 10 is applied to the read/write enable input of an addressable memory 24. Accordingly, the code or output of the counter 10 which acts as the access code for the system is used to enable the memory 24. Accordingly, the function 30 performed subsequent to the counter is performed by the addressable memory 24 with the counter acting as an access code to the memory, since the memory is inoperable without the proper code from the counter being applied thereto. Additional codes in the form of passwords could also be applied to the accessible memory so that both the code from the counter as well as the password would have to be applied to the memory 24 before data output is provided.

In Fig. 3, a simple Boolean expression (1 + 2 + 3) 4 5 (6 + 7) function 35 is set up for the data bit inputs using a NOR gate 32, an AND gate 34 and an OR gate 36. The data bit inputs are clocked into a serial shift register 38 to be stored for later retrieval. The clock signal is also applied to the counter 10 which counts the number of the clocked-in data, hence the number of times the function is performed. When counter 10 reaches the terminal counts (preset number or code in), a two input AND gate 40 controls the clock inputs and terminates any further clock input pulses thus capturing only that sequence of data which is the result of the coded data bit inputs (code, the function) of the aforesaid equation on the resetting of counter 10. The register 38 may be read out at some later time and compared to a data list to corroborate whether the incoming data was "true" or "false".

In Fig. 4, a function 35 is illustrated for limiting the uses of a given password. The usefulness is in security applications whereby the password has been "acknowledged" (as in Fig. 1) and clocks into a counter 42 of known value. The function, which includes the 2-input AND gate 44 allows an output at each password completion (as in Fig. 1) except as limited in Fig. 4. Thus, after a password has been used a predetermined number of times, no further access will be allowed.

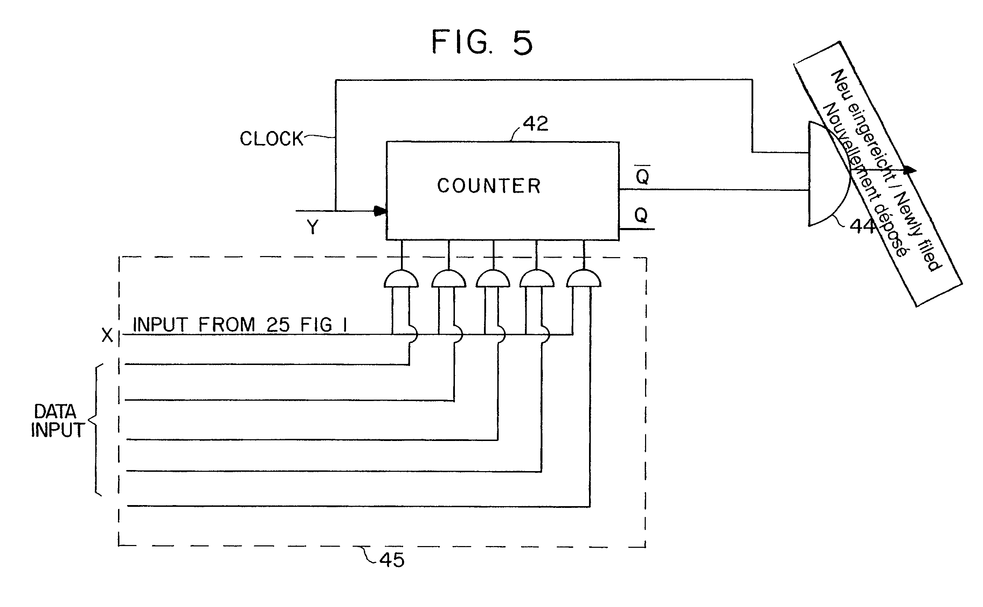

Fig. 5 shows how the counter 42 (as shown in Fig. 4) may be reprogrammed (function 45) by means of using a type of counter which allows each of the stages of the counter to be "preset" by means of "jam" inputs. As shown, when a password has been acknowledged (as from Fig. 1, data out 25) as x, the data inputs are "jammed" in when the "preset enable" is asserted thus reprogramming the counter 42 to a number equal to the data input on command of the password illustrating how a counter (used in the password acknowledge) is used to control the function 45: reprogram number of uses counter.

Thus, it can be seen that the "functions" per se are limitless and each function may be designed for some particular purpose it may solve. The invention, on the other hand, counts the number of these "solutions" or "functions" (as defined) and further limits, alters the course of, or even modifies the function itself, and can further count the number of uses of the modified functions themselves.

Thus, in accordance with the present invention, an additional function or functions must be performed either prior to or subsequent to the operation of the plug-in resettable counter which at little expense provides considerably greater security for the software being protected than would be the case with simply the code set in the counter. The additional sources of signals or passwords can be provided from the computer itself and/or from the software in accordance with the desires of the user and the capability of the computer which is operating on the software being protected.

Since other changes and modifications varied to fit particular operating requirements and environments will be apparent to those skilled in the art, the invention is not considered limited to the examples chosen for purposes of illustration, and includes all changes and modifications which do not constitute a departure from the true spirit and scope of this invention as claimed in the following claims and equivalents thereto.

## Claims

1. A method of protecting computer software using a hardware security device having a presettable counter which is removably connectable to a computer permitting signal interchanges therebetween comprising the steps of:
performing a given function a predetermined number of times;
generating an output when the given function is performed;
applying the output to the counter for accessing the counter when the given function is performed and providing an output from the counter when the given function is performed a predetermined number of times equal to the count preset in the counter.

2. The method as claimed in Claim 1 wherein the function performed comprises the steps cf:
coupling a plurality of sources in the form of input bit streams to a comparator;
applying computer signals from the computer to the comparator and the counter for applying the results of the comparator to the counter in accordance the computer signal.
comparing said plurality of sources in the comparator;
generating an output when at least two of said sources match;
applying the matched output to said preset counter from the computer for continually varying the count in the counter during each computer signal transition when a match is produced;
resetting the counter to the original starting point when a mismatch occurs whereby the counter must receive a predetermined number of correct responses in succession corresponding to the present number therein or else no output occurs from the counter.

3. The method of protecting computer software as claimed in Claim 2 including wherein the step of coupling said sources includes using a secret, stored, non-volatile memory as one of said plurality of sources.

4. A method of protecting computer software using a hardware security device having a presettable counter which is removably connected into a computer comprising the steps of:
presetting said counter to a predetermined number thereby providing an access code and applying clock pulses to said counter for generating an access code output when said preset number is reached; and
applying the output of the counter to a function performing device for providing an access code to the device for rendering the device operable to generate a data output therefrom, to write data into the device or as an access code to render device operable to enable the transfer of data to or from said device.

5. The method of protecting computer software as claimed in Claim 4 wherein the function performing device is an addressable memory.

6. An apparatus for protecting computer software using a hardware security device having a presettable counter which is removably connectable to a computer comprising:
a function performing device for performing a function a predetermined number of times;
means for generating a function output when the given function is performed said predetermined number of times;
means for applying said function output to said counter for accessing said counter when the function of said function performing device is performed said predetermined number of times;
means for generating an output from said counter when the preset count in said counter is reached after being accessed by said function performing device; and
means for resetting the counter to an initial preset condition when an improper response is received from said function performing device.

7. The apparatus as claimed in Claim 6 wherein said function performing device comprises:
a comparator for comparing sources applied thereto;
means for coupling a plurality of sources in the form of input bit streams to said comparator;
means for applying signals from said computer producing clock pulses to said comparator whereby said comparator compares source during each clock pulse;
means for generating an output from said comparator when at least two of said sources match;
means for applying the matched output from said comparator to said preset counter along with signals from the computer for continually varying count in the counter during each clock transition when a match is produced; and
means for resetting said counter to the original starting point when a mismatch occurs in said comparator whereby the counter must receive a predetermined number of correct responses in succession corresponding to the present number therein or else no output occurs from the counter.

8. The apparatus for protecting computer software as claimed in Claim 7 wherein at least one of said sources is a secret, stored, non-volatile memory.

9. The apparatus for protecting computer software as claimed in Claim 7 wherein said comparator comprises an exclusive NOR gate.

10. An apparatus for protecting computer software using a hardware security device having a presettable counter which is removably connectable to a computer comprising:

means for presetting said counter to a predetermined number for providing an access code;

means for applying clock pulses to said counter for generating said access code when said preset number in said counter is reached;

a function performing device which generates an output when said access code is applied thereto;

means for coupling said counter to said function performing device for providing an access code to said function performing device to provide an output therefrom on the receipt of said access code from said counter.

11. The apparatus as claimed in Claim 10 when in said function performing device is an addressable memory.

**FIG. 1**

A
B
12
15
CLOCK
14
16
CLOCK
18
CLOCK
COUNTER
10
22
RESET
25
OUTPUT

**FIG. 2**

A
CLOCK
COUNTER
10
B
CLOCK
30
READ/WRITE
ENABLE
ADDRESSABLE
MEMORY
24
25
DATA
OUT

EP 0 417 611 A2

# FIG. 3

DATA BIT

INPUTS

DATA IN

DATA OUT

SERIAL SHIFT REGISTER 38

CLOCK

COUNTER 10

Q

Q̄

RESET

# FIG. 4

FROM 25 FIG. 1

CLOCK

COUNTER 42

Q̄

Q

RESET

ACKNOWLEDGE PASSWORD

44

37

# FIG. 5

EP 0 417 611 A2